# EUROPEAN PATENT SPECIFICATION

(11) **EP 3 608 842 B1**
(45) Date of publication and mention of the grant of the patent: **17.08.2022**
(21) Application number: 19177611.1
(22) Date of filing: 31.05.2019
(51) Int. Cl.: G06K 19/00, B42D 25/46

(54) **CARD WITH RELIEF STRUCTURE**
KARTE MIT RELIEFSTRUKTUR
CARTE AYANT UNE STRUCTURE EN RELIEF

(30) Priority: 08.08.2018 GB 201812859
(43) Date of publication of application: 12.02.2020
(73) Proprietor: Asahi Seiko Co., Ltd., Tokyo 107-0062 (JP)
(72) Inventor: Willis, Marcus, Sittingbourne, Kent ME10 4HN (GB)
(74) Representative: Gill Jennings & Every LLP

(56) References cited:
- EP-A1- 2 848 422
- DE-A1- 19 537 177
- JP-B2- 5 297 282
- US-A- 5 226 665
- US-A- 5 654 050

## Description

### FIELD OF THE INVENTION

The present invention relates to a card having a relief structure, and to a lamination plate for forming said card.

### BACKGROUND TO THE INVENTION

Card dispensers are often provided within card vending machines and ticket kiosks, such as those found at theme parks, parking lots and public transportation stations. The cards will typically be arranged within the dispensers in stacks. An integrated circuit or magnetic strip may be provided on each card so as to enable information to be exchanged between the card and an electronic card reader. These cards are therefore commonly referred to as "smart cards". Each card is generally planar but may have a glossy, silk, frosted or matte surface finish on one or both sides applied by a lamination plate. Rollers may be arranged within the card dispenser so as to dispense an end card from the stack. The end card will be separated from the remaining cards in the stack and transported in a longitudinal direction, perpendicular to the stack, by the action of these rollers.

It has been found that, in some circumstances, the cards can tend to stick together within the stack thereby inhibiting the dispensing operation. This problem has been found to occur most often when the dispenser is exposed to temperatures in excess of 40 degrees Celsius and to large changes in the temperature (for example 20 degrees Celsius or more) and humidity. It is therefore desirable to facilitate the more reliable dispensing of cards within such environments.

JP 5297282 describes a card with a relief structure formed of raised elements.

DE 19537177 describes a plastic card having a relief structure generated by means of laser radiation in the form of a palpable, raised alphanumeric information as Braille font.

EP 2848422 describes an apparatus including a first substrate first layer having a first side and a second side. The apparatus includes a second substrate first layer having a third side and a fourth side. The second side is coupled to the third side. The first substrate first layer and the second substrate first layer are preferably embossed.

US 5226665 describes an anti-stick playing-card made from a sheet of polyvinyl chloride coating with a paint and embossed with stripes and raised portions on two opposite surfaces thereof by means of the operation of an embossed impression cylinder and through the radiation of an ultra-violet device.

US 5654050 describes a laminated card, such as a game card, with embossment that is a repetitive pattern of closely spaced indentations which are aligned vertically and horizontally and that extends substantially uniformly across the face of each side of the card.

### SUMMARY OF THE INVENTION

The invention is defined by the set of appended claims. A first aspect of the invention provides a card comprising a first major surface, a second major surface provided opposite to the first major surface, and a relief structure substantially occupying the surface area of the first major surface, the relief structure being formed of raised elements, the raised elements defining exposed regions of a base of the first major surface provided between said raised elements, the raised elements protruding from the base by 0.02-0.1 mm, characterised in that the raised elements have an equal height across the first major surface and so form an upper planar surface on the card, and wherein the raised elements form walls extending substantially along the width and length of the first major surface, the walls separating the exposed regions into cells and surrounding each said cell. The relief structure is surrounded by a border formed of the upper planar surface such that the border and the raised elements have an equal height across the first major surface.

We have found that the earlier discussed problem of card adhesion results from a combination of factors including "wringing", van der Waals forces and capillary adhesion. For example, for tightly packed cards, little or no air may be provided between the contacting surfaces. The air pressure from the surrounding environment can act therefore to press the cards together. Additionally, when the cards are located within a humid environment, the surface tension from the water vapour at the card interfaces further increases this holding force. It is also thought that for some very flat surfaces, this holding force is increased further due to the interchange of electrons between the two surfaces.

The raised elements provided by the first aspect advantageously reduce the contact surface area between the first major surface and a contacting surface. When several cards having the relief structured are arranged in a stack, each card can then be dispensed individually without sticking to another. Furthermore, the raised elements have relatively low height so as to ensure that the thickness of each card is not appreciably increased (if at all). The same number of cards can therefore be contained within a cassette as would be the case if no such raised features were provided.

The relief structure extends substantially across the width of the major surface substantially along the length of the major surface. For example, it may extend across a substantial portion of the width of major surface (e.g. 80%) and across a substantial portion of the length of major surface (e.g. 80%) in a box shape or an approximation thereof. The high coverage of the relief structure on the first major surface reduces the likelihood of any parts of the first major surface becoming adhered to the contacting surface of another card. For an approximately rectangular card, the "width" denotes the end-to-end distance of each of the shorter sides of the card (along the plane of the major surface), whereas the "length" denotes the end-to-end distance of each of the longer sides (perpendicular to the shorter sides).

The raised elements typically have an equal and constant height relative to the base. For example the raised elements may form at least part of an upper planar surface of the first major surface. The upper planar surface is typically parallel to the base. This ensures that a contacting card is lifted from the base by the same amount across the contacting surface of the card and so reduces the likelihood of card adhesion occurring. It is particularly desirable that the relief structure is surrounded by a border formed of the upper planar surface. This border may hence provide the remainder of the upper planar surface. The border prevents any of the exposed regions from forming part of the edges of the card. This would be undesirable because the relatively narrow raised elements provided between these regions at the edges of the card could otherwise break or peel away from the base after repeated use of the card. The border therefore protects the first major surface so as to prevent the edges from appearing worn.

The raised elements are mutually connected and may form walls. The raised elements form walls extending substantially along the width and length of the first major surface. The walls extending along the length of the card reduce the likelihood of a raised element catching on another surface as the card is slid longitudinally away from the stack. Additionally, the walls extending along the width of the card reduce the likelihood of the card warping about an axis extending in the longitudinal direction when the card is exposed to high changes in temperature.

The walls separate the exposed regions into cells. More generally, each exposed region forms a cell that is surrounded by the raised elements so as to be isolated from the remaining cells. This has been found to both advantageously strengthen the card by preventing warping, and to reduce the likelihood of the card catching to another surface when slid away from the stack. Each cell is preferably separated from another cell by less than 3 mm of material formed by a said raised element. Preferably still less than 2 mm or less than 1 mm of said material is provided between adjacent cells. Thin boundaries such as this advantageously reduce the contact surface area between the major surface and a contacting surface, and so reduce the likelihood of the two surfaces joining together. It has been found desirable that each cell has a maximum diameter of 3-8 mm. Substantially circular exposed regions are particularly desirable. Thin separating regions of raised elements can then be provided having the advantages earlier described. The exposed regions are preferably close-packed, preferably still hexagonally close-packed for this reason. The hexagonal close-packed arrangement provides a high strength structure across an area using minimal amounts of raised material. Other geometrical lattices, such as those using triangles and squares, have been shown to have a larger total perimeter and so provide the first major surface with a larger contact surface area than is achieved using the hexagonal arrangement. As mentioned earlier, it is particularly desirable that the overall contact surface area of the first major surface is low. The relief structure therefore substantially occupies the first major surface. Preferably, the relief structure covers at least 70%, preferably still at least 80%, of the surface area of the first major surface. Preferably still, the exposed regions occupy more than 40%, preferably still more than 50% of the surface area of the first major surface.

The exposed regions are preferably embossed with respect to the raised elements. Further still, the raised elements are preferably formed of a laminate. The raised elements and the base itself may hence be formed of the same laminate into which the relief structure has been pressed during the manufacturing process. The exposed regions may therefore correspond to impressions in the laminate. This has been found to be a particularly efficient and cost-effective means of manufacturing the relief structure when compared to other techniques, such as printing. Furthermore, the raised elements may hence be formed without increasing the overall thickness of the card because the impressions are made within the thickness of the card.

The card is preferably a smart card. The card may therefore comprise an integrated circuit or magnetic strip so as to enable data to be read from the card using an electronic card reader. The card is therefore typically made predominantly or entirely of plastic, as is common for transportation cards, payment cards and the like. Furthermore the card typically conforms to the ISO/IEC 7810 ID-1 standard. The card may therefore have a length of about 86 mm and a width of about 54 mm.

It is particularly desirable that the relief structure is provided on the first major surface of the card only. The second major surface may in contrast provide a flat surface for a relief structure of another card to slide against without interruption. The second major surface preferably has a finish configured to provide to reduce any friction present between the card and a contacting card during relative movement of the cards. For example it may be glossy. This may also be desirable for cosmetic reasons. Alternatively another relief structure may be provided on the second major surface. It then does not matter which way up the card is orientated when resting on a flat surface - a relief structure will be present at the interface between the card and the flat surface to reduce the likelihood of card adhesion occurring. The relief structure of the second major surface may have any of the properties discussed herein with reference to the relief structure of the first major surface.

A second aspect of the invention provides a stack of cards comprising a plurality of cards each according to the first aspect. The cards may hence be vertically arranged on top of each other as a stack. The relief structures may hence prevent the cards from becoming stuck together within the stack.

It is particularly desirable that the cards within the stack are similarly arranged. Preferably, therefore, the cards are arranged such that each said first major surface has a normal vector pointed in a common direction. This prevents the first major surfaces from directly contacting each other. The relief structures formed thereon may in some circumstances otherwise catch against each other when the cards are moved laterally relative to one-another. This arrangement therefore ensures that the cards may be reliably dispensed. Furthermore, this arrangement ensures that a relief structure is provided at the interface between each card within the stack without the need to provide a relief structure on both major surfaces of each card. The second major surface may then be flat.

It has been found that the relief structure may be efficiently produced using a lamination plate. Therefore, a third aspect of the invention provides a lamination plate for forming a card according to the first aspect, the lamination plate comprising a patterning surface configured to impress the relief structure onto a laminate for a card. The patterning surface may hence reflect the inverse of the relief structure. For example, the patterning surface may comprise recesses shaped so as to form the raised elements from the laminate. Alternatively one or more surfaces may project from the lamination plate to form the exposed regions on the laminate.

### BRIEF DESCRIPTION OF THE DRAWINGS

Embodiments of the present invention will now be discussed with reference to the accompanying drawings in which:
Figure 1 is a front view of a card according to a first embodiment;
Figure 2 is a perspective view of the card according to the first embodiment;
Figure 3 is a back view of the card according to the first embodiment;
Figure 4 is a side view of the card according to the first embodiment;
Figure 5 is a front view of a card according to a comparative example;
Figure 6 is a schematic illustration of a lamination plate for forming the card according to the first embodiment; and
Figure 7 is a perspective view of the card according to a second embodiment.

### DETAILED DESCRIPTION

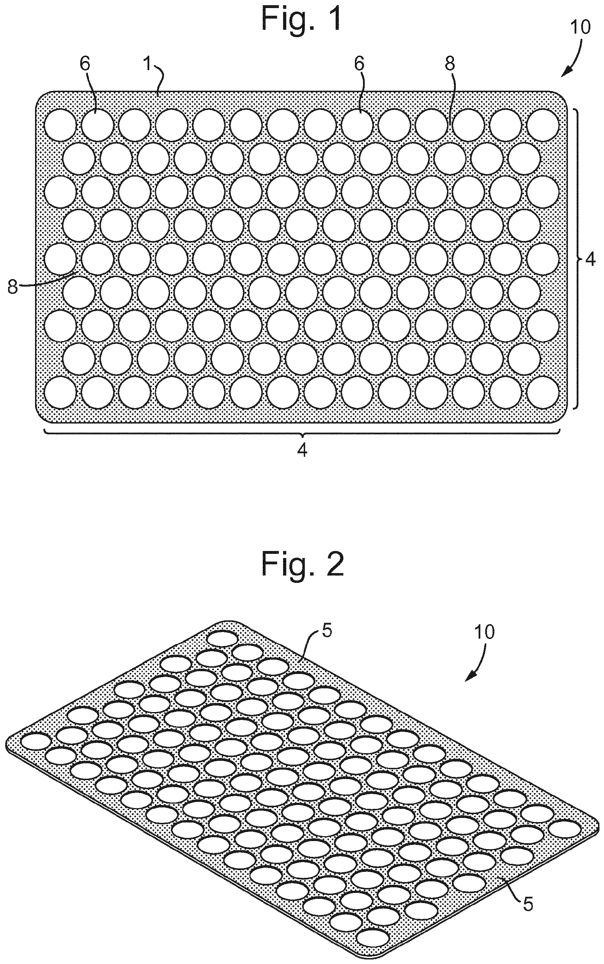

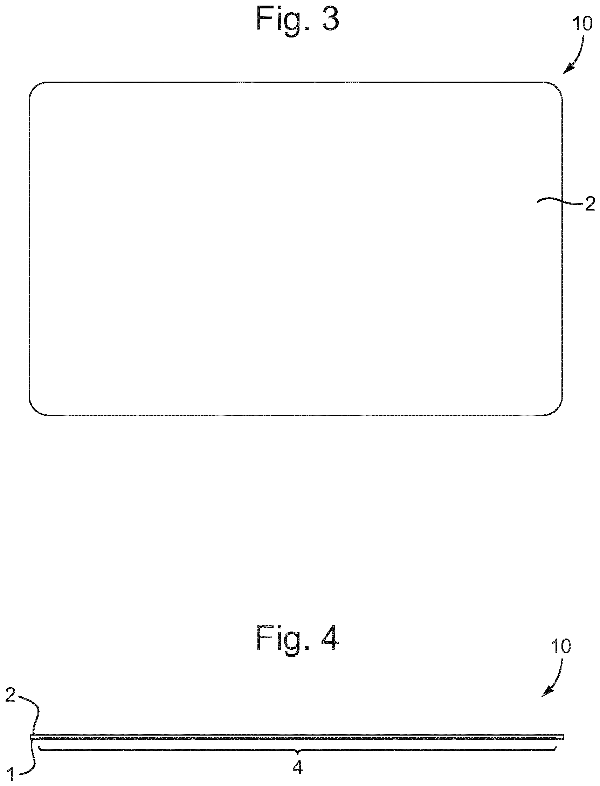

A first embodiment of a card 10 is shown by Figures 1-4. The card 10 is manufactured so as to conform to the ISO/IEC 7810 ID-1 standard applied to payment cards, such as credit cards. The card is therefore pocket-sized, substantially rectangular and has rounded corners. More specifically, the card has a length of 85.60 mm, a width of 53.98 mm and a thickness of 0.76 mm (visible in the side view of Figure 4). The card 10 is formed substantially of polymer but comprises an integrated circuit (not shown) within the body of the card 10 to enable near-field communication to occur with an external card reader. The card 10 is therefore an example of a "smart card".

The card 10 has a first major surface 1 and a second major surface 2, the second major surface 2 being provided opposite to the first major surface 1. The first major surface 1 is visible in the front and perspective views of Figures 1 and 2, and the second major surface 2 is visible in the back view of Figure 3. A relief structure 4 is provided on the first major surface 1 only. This is formed of a plurality of exposed regions 6 that are recessed with respect to the remainder of the first major surface 1. Each exposed region 6 forms a circular cell that is separated from the remaining cells by raised elements 8 in the form of walls of laminate material. These walls have a constant height with respect to a base of the first major surface 1 provided by the exposed regions 6. Importantly, the raised elements 8 reduce the contact surface area between the first major surface 1 and a contacting surface (e.g. provided by an adjacent card within a card stack). This reduces the likelihood of the card 1 adhering to the contacting surface.

Each exposed region 6 has a diameter of 5 mm and a constant depth of 0.05 mm with respect to the upper planar surface. The exposed regions 6 are hexagonally close packed so as to maximise the number of exposed regions 6 provided on the first major surface 1. This arrangement minimises the amount of material required to separate each exposed region 6 and so reduces the contact surface area further.

In the first embodiment, the raised elements 8 are mutually connected. Furthermore, the walls extend substantially along the width and length of the first major surface 1. The walls extending substantially along the length of the first major surface 1 ensure that the card 10 may be moved longitudinally along the same plane without it catching against any surfaces. Additionally, the walls extending substantially along the width of the first major surface 1 reduce the likelihood of the card warping due to changes in temperature. If, by contrast, the raised elements extended only along the length of the card 10, the card 10 may be prone to warp about its longitudinal axis. The combination of the walls extending substantially in both directions therefore increases the structural integrity of the card 10 and facilitates more reliable dispensing of the card 10.

The relief structure 4 substantially occupies the surface area of the first major surface 1. In particular, the relief structure 4 has an approximately rectangular outline and is surrounded by an adjoining border 5 of laminate material which separates it from the edges of the card 10. The relief structure 4 therefore extends substantially along the length of the card 10 substantially along the width of the card 10. The border 5 prevents the edges of the card 10 from appearing worn. If, by contrast, exposed regions 6 were provided along the edges of the card 10, the thin raised elements separating these regions at the edges might break and peel away after repeated use of the card 10. Additionally, the border 5 may help prevent the raised elements 8 from becoming caught during lateral movement of the card 10.

The border 5 and the raised elements 8 have an equal height across the first major surface 1 and so form an upper planar surface on the card. A lower planar surface is provided by the surfaces of the exposed regions 6. This forms a "base" of the first major surface 1. In this example 58% of the first major surface 1 is covered by the exposed regions 6, whilst approximately 80% of the first major surface 1 is covered by the relief structure 4 (the difference being covered by the raised elements 8). Unlike the first major surface 1, the second major surface 2 has a constant and flat profile across its surface area. The second major surface 2 is therefore devoid of any relief structure.

The relief structure 4 acts to reduce the contact surface area between the first major surface 1 and a contacting surface. In the event that the card 10 is arranged within a stack of cards, this contacting surface is typically the second major surface of another similarly formed card. The cards may hence be arranged in a similar orientation so that the normal vector for each first major surface extends in the same direction (for example upwards or downwards). A relief structure 4 is therefore provided at each interface between contacting cards. This facilitates the more reliable dispensing of cards from the stack by reducing the contact surface area and so reducing the likelihood of the cards becoming adhered together. Importantly, it has been found that the cards having this relief structure 4 may be reliably and individually dispensed from a stack in particularly hot and humid environments. For example, experimentation has shown that cards having the relief structure 4 can be reliably dispensed in environments at 60 degrees Celsius with a relative humidity of 30% without adhering together within the stack.

A further advantage provided by the card 10 is that the relief structure 4 does not increase the overall thickness of the card 10. The exposed regions 6 are embossed into the first major surface 1. The exposed regions 6 hence form impressions within the thickness of the card 10 and the relief structure 4 is maintained within the nominal thickness of the card 10. The presence of the relief structure 4 on each card 10 therefore does not reduce the number of cards 10 which may be provided as a stack within a fixed length card cassette, nor does it increase the likelihood of cards becoming caught when slid across another surface.

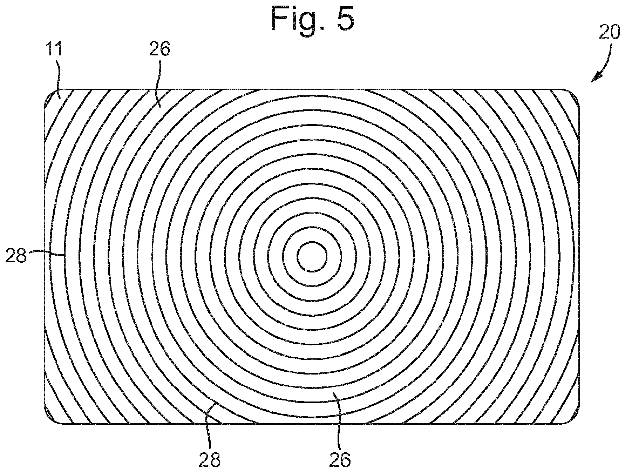

A front view of a card 20 according to a comparative example falling outside the scope of the invention is shown by Figure 5. The card 20 is similar to the card 10 of the first embodiment except that it has a different relief structure. In the comparative example, the relief structure occupies the entire surface area of the first major surface 11. Furthermore, the raised elements 28 form distinct walls that are concentrically arranged around the centre of the first major surface 11. The raised elements 28 are separated by exposed regions 26 of the card 20 and protrude from the exposed regions 26 by 0.1 mm in a direction normal to the first major surface 11. The second major surface is flat as per Figure 3.

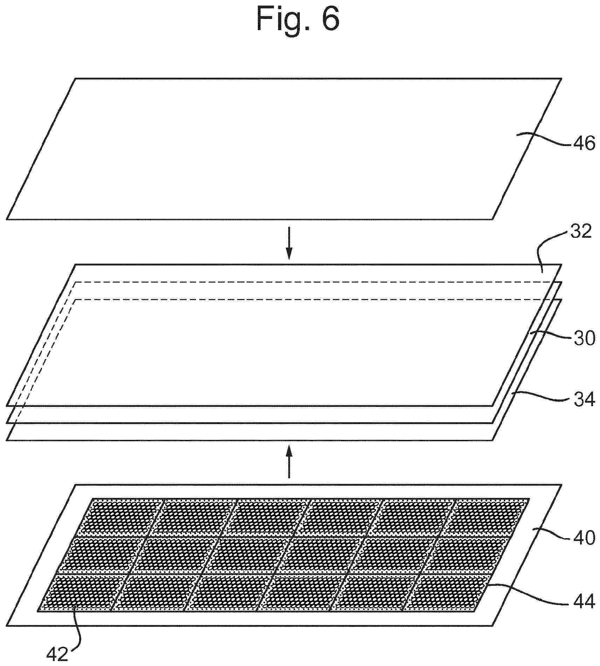

The first and second major surfaces of both embodiments are formed of a laminate. The exposed regions 6, 26 are embossed into the laminate on the first major surface 1, 11. The laminate therefore forms the base of the exposed regions 6, 26 the raised elements 8, 28 and, in the case of the first embodiment, the border 5 also. A card body is provided between the laminate layers, as is standard for smart cards. A process for manufacturing the card 10 will now be described with reference to Figure 6.

A core 30 for forming the card body of a plurality of cards is produced using standard card manufacturing techniques. The core 30 comprises a plurality of layers of card material, including an integrated circuit layer, arranged on top of each another. In this embodiment the core 30 is configured to form eighteen cards according to the ISO/IEC 7810 ID-1 standard. Other sized cores could be used for forming any number of cards.

A laminate film 32, 34 is applied to both sides of the core 30 so as to cover the major surfaces. A lamination press is then used to heat and fuse the laminate 32, 34, onto the core 30 and to fuse the various layers of card material together. The lamination press has a lamination plate 40 that is configured to press the laminate 32, 34 and the core 30 against an opposing plate 46 formed of polished stainless steel. In so doing, a patterning surface 44, provided on the lamination plate 40, impresses the relief structure 4 onto the first laminate layer 34.

The patterning surface 44 is initially obtained by a chemical etching process. In this example a polished stainless steel plate is first laminated with a layer of light-sensitive resist to form a substrate. The photoresist is then selectively exposed to UV light and developed to obtain a positive image of the patterning surface 44. The substrate is then exposed to an etching solution, such as muriatic (hydrochloric) acid, nitric acid, or sulfuric acid, to selectively remove approximately 0.05 mm of material from the surface.

The etched surface (indicated by the shading in Figure 6) is consequently recessed with respect to the remainder of the plate and has a comparatively rougher texture due to its interaction with the etchant. This rougher surface imparts a matte finish onto the first laminate layer 34 whereas the polished non-etched surfaces 42 of the lamination plate 40 and the opposing plate 46 impart an alternative finish (in this case glossy) onto the laminate 32, 34. These two textures are visible in Figures 1 and 2 in that the shaded surface corresponds to the matte surface and the white surfaces correspond to a glossy finish.

After lamination, the sheet of laminated card material is cut into individual cards 10 using a card cutting and card body punching machine according to standard techniques. Cards 10 according to the first embodiment are thereby formed.

This process is particularly efficient and can be implemented using existing card manufacturing processes at minimal additional cost. Other methods for manufacturing relief structures according to the invention are also contemplated however, such as printing or varnishing techniques. It is further envisaged that the relief structure could be produced by lamination process without the need for a patterning surface on the lamination plate. For example, a laminate film could be provided having a plurality of holes to it, each said hole corresponding to an exposed region. The film could then be laminated onto the core so as to form the relief structure, wherein the core is exposed at each exposed region.

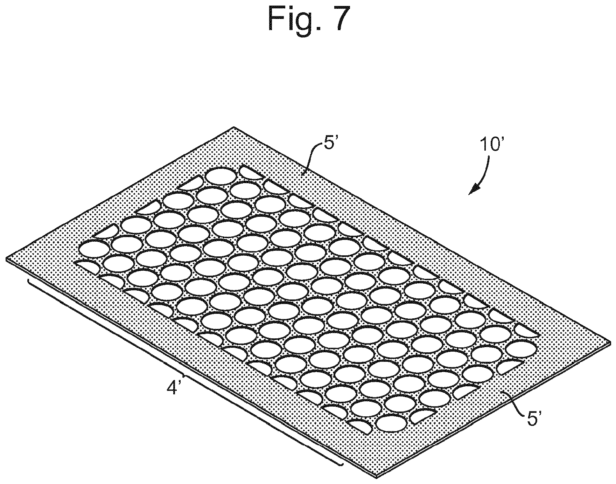

A second embodiment of a card 10' is shown by Figure 7. This embodiment is substantially the same as the first embodiment except that the border 5' occupies a higher proportion of the major surface in comparison to the relief structure 4'. In particular the border 5' is wider in that it extends from each edge of the card 10' by a greater amount, thereby leaving a smaller region within the centre of the card 10' for the relief structure 4'. In the present case the card 10' has the same length and width as the first embodiment however the border 5' extends from the long edge of the card 10' by at least 6 mm and from the short edge of the card 10' by at least 5mm. The outermost exposed regions of the relief structure 4' are segmented by the border 5' and so have a non-circular outline (unlike the remaining exposed regions).

As in the previous embodiments, the relief structure 4' is impressed onto the card by a lamination plate. A corresponding pattern is therefore provided in the lamination plate. A particular advantage of the second embodiment is that the wider border 5' allows a higher tolerance for misalignment of the lamination plate with respect to the card (or the respective areas of core and laminate layers for forming the card). Although the relief structure 4' is preferably centred within the major surface of the card 1', the relief structure 4' may be applied off-centre by a greater amount without any of the exposed regions overlapping an edge of the card 1'. A solid frame border is therefore maintained around each side of the relief structure 4', despite a degree of positional "float" of the relief structure 4' on the card 1' which can commonly occur during manual operation of the lamination plate. This ensures the laminate does not peel away from the edges of the card and so prevents the card from appearing worn.

In summary it will be appreciated that a card is therefore provided which is less likely to become adhered to flat surfaces, such as those provided by other cards within a card stack, than the prior art. This overcomes the problems earlier discussed in the background section. Furthermore a lamination plate is provided for the efficient manufacture of this card.

## Claims

1. A card (10) comprising a first major surface, a second major surface (2) provided opposite to the first major surface (1), and a relief structure substantially occupying the surface area of the first major surface, the relief structure (4) being formed of raised elements (8), the raised elements defining exposed regions (6) of a base of the first major surface provided between said raised elements, the raised elements protruding from the base by 0.02-0.1 mm, **characterised in that** the raised elements have an equal height across the first major surface and so form an upper planar surface on the card, and wherein the raised elements (8) form walls extending substantially along the width and length of the first major surface (1), the walls separating the exposed regions (6) into cells and surrounding each said cell, wherein the relief structure is surrounded by a border (5) formed of the upper planar surface such that the border and the raised elements have an equal height across the first major surface (1).

2. A card according to claim 1, wherein the raised elements (8) and the exposed regions (6) extend across at least 80% the width of the major surface (1) along at least 80% the length of the major surface (1).

3. A card according to claims 1 or 2, wherein the exposed regions (6) occupy more than 40% of the surface area of the first major surface (1).

4. A card according to claim 3, wherein each cell is separated from another cell by less than 3 mm of material formed by a said raised element (8).

5. A card according to claims 3 or 4, wherein each cell has a maximum diameter of 3-8 mm.

6. A card according to any of the preceding claims, wherein the exposed regions (6) are substantially circular.

7. A card according to any of the preceding claims, wherein the exposed regions (6) are hexagonally arranged.

8. A card according to any of the preceding claims, wherein the relief structure (4) covers at least 70% the surface area of the first major surface (1).

9. A card according to any of the preceding claims, wherein the exposed regions (6) are embossed with respect to the raised elements (8).

10. A card according to any of the preceding claims, wherein the raised elements (8) are formed of a laminate.

11. A card according to any of the preceding claims, wherein the second major surface (2) is flat.

12. A stack of cards comprising a plurality of cards each according to any of the preceding claims.

13. A stack of cards according to claim 12, wherein said cards are arranged such that each said first major surface (1) has a normal vector pointed in a common direction.

14. A lamination plate for forming a card according to any of claims 1 to 11, the lamination plate comprising a patterning surface configured to impress the relief structure (4) onto a laminate for a card, in a manner such that the card has its relief structure surrounded by a border (5).

## Patentansprüche

1. Karte (10) mit einer ersten Hauptfläche, einer zweiten Hauptfläche (2), die gegenüber der ersten Hauptfläche (1) vorgesehen ist, und einer Reliefstruktur, die im Wesentlichen den Oberflächenbereich der ersten Hauptfläche einnimmt, wobei die Reliefstruktur (4) aus erhabenen Elementen (8) gebildet ist, wobei die erhabenen Elemente freiliegende Bereiche (6) einer Basis der ersten Hauptfläche definieren, die zwischen den erhabenen Elementen vorgesehen sind, wobei die erhabenen Elemente von der Basis um 0,02 bis 0,1 mm vorstehen, **dadurch gekennzeichnet, dass** die erhabenen Elemente eine gleiche Höhe über die erste Hauptfläche haben und so eine obere ebene Fläche auf der Karte bilden, und wobei die erhabenen Elemente (8) Wände bilden, die sich im Wesentlichen entlang der Breite und Länge der ersten Hauptfläche (1) erstrecken, wobei die Wände die freiliegenden Bereiche (6) in Zellen unterteilen und jede Zelle umgeben, wobei die Reliefstruktur von einer Umrandung (5) umgeben ist, die aus der oberen ebenen Fläche gebildet ist, so dass die Umrandung und die erhabenen Elemente eine gleiche Höhe über die erste Hauptfläche (1) haben.

2. Karte nach Anspruch 1, wobei sich die erhabenen Elemente (8) und die freiliegenden Bereiche (6) über mindestens 80 % der Breite der Hauptfläche (1) entlang mindestens 80 % der Länge der Hauptfläche (1) erstrecken.

3. Karte nach einem der Ansprüche 1 oder 2, wobei die freiliegenden Bereiche (6) mehr als 40 % der Oberfläche der ersten Hauptfläche (1) einnehmen.

4. Karte nach Anspruch 3, wobei jede Zelle von einer anderen Zelle durch weniger als 3 mm Material getrennt ist, das durch ein erhöhtes Element (8) gebildet wird.

5. Karte nach einem der Ansprüche 3 oder 4, wobei jede Zelle einen maximalen Durchmesser von 3 bis 8 mm hat.

6. Karte nach einem der vorhergehenden Ansprüche, wobei die freiliegenden Bereiche (6) im Wesentlichen kreisförmig sind.

7. Karte nach einem der vorhergehenden Ansprüche, wobei die freiliegenden Bereiche (6) sechseckig angeordnet sind.

8. Karte nach einem der vorhergehenden Ansprüche, wobei die Reliefstruktur (4) mindestens 70 % der Oberfläche der ersten Hauptfläche (1) bedeckt.

9. Karte nach einem der vorhergehenden Ansprüche, wobei die freiliegenden Bereiche (6) in Bezug auf die erhabenen Elemente (8) geprägt sind.

10. Karte nach einem der vorhergehenden Ansprüche, wobei die erhabenen Elemente (8) aus einem Laminat gebildet sind.

11. Karte nach einem der vorhergehenden Ansprüche, wobei die zweite Hauptfläche (2) flach ist.

12. Kartenstapel mit einer Vielzahl von Karten nach einem der vorhergehenden Ansprüche.

13. Kartenstapel nach Anspruch 12, wobei die Karten so angeordnet sind, dass jede der ersten Hauptflächen (1) einen Normalenvektor aufweist, der in eine gemeinsame Richtung zeigt.

14. Laminierplatte zur Bildung einer Karte nach einem der Ansprüche 1 bis 11, wobei die Laminierplatte eine Musterungsfläche umfasst, die so konfiguriert ist, dass sie die Reliefstruktur (4) auf ein Laminat für eine Karte in einer solchen Weise aufdrückt, dass die Reliefstruktur der Karte von einem Rand (5) umgeben ist.

## Revendications

1. Carte (10) comportant une première surface principale, une deuxième surface principale (2) mise en œuvre à l'opposé de la première surface principale (1), et une structure en relief occupant sensiblement la superficie de la première surface principale, la structure en relief (4) étant formée à partir d'éléments surélevés (8), les éléments surélevés délimitant des régions exposées (6) d'une base de la première surface principale mises en œuvre entre lesdits éléments surélevés, les éléments surélevés faisant saillie depuis la base sur 0,02 à 0,1 mm, **caractérisée en ce que** les éléments surélevés ont une hauteur égale en travers de la première surface principale et forment ainsi une surface plane supérieure sur la carte, et dans laquelle les éléments surélevés (8) forment des parois s'étendant sensiblement le long de la largeur et de la longueur de la première surface principale (1), les parois séparant les régions exposées (6) en des cellules et entourant chaque dite cellule, dans laquelle la structure en relief est entourée d'une bordure (5) formée à partir de la surface plane supérieure de telle sorte que la bordure et les éléments surélevés ont une hauteur égale en travers de la première surface principale (1).

2. Carte selon la revendication 1, dans laquelle les éléments surélevés (8) et les régions exposées (6) s'étendent en travers d'au moins 80 % de la largeur de la surface principale (1) le long d'au moins 80 % de la longueur de la surface principale (1).

3. Carte selon la revendication 1 ou la revendication 2, dans laquelle les régions exposées (6) occupent plus de 40 % de la superficie de la première surface principale (1).

4. Carte selon la revendication 3, dans laquelle chaque cellule est séparée d'une autre cellule par moins de 3 mm de matériau formé par un dit élément surélevé (8).

5. Carte selon la revendication 3 ou la revendication 4, dans laquelle chaque cellule a un diamètre maximum de 3 à 8 mm.

6. Carte selon l'une quelconque des revendications précédentes, dans laquelle les régions exposées (6) sont sensiblement circulaires.

7. Carte selon l'une quelconque des revendications précédentes, dans laquelle les régions exposées (6) sont agencées de manière hexagonale.

8. Carte selon l'une quelconque des revendications précédentes, dans laquelle la structure en relief (4) recouvre au moins 70 % de la superficie de la première surface principale (1).

9. Carte selon l'une quelconque des revendications précédentes, dans laquelle les régions exposées (6) sont gaufrées par rapport aux éléments surélevés (8).

10. Carte selon l'une quelconque des revendications précédentes, dans laquelle les éléments surélevés (8) sont formés à partir d'un stratifié.

11. Carte selon l'une quelconque des revendications précédentes, dans laquelle la deuxième surface principale (2) est plate.

12. Pile de cartes comportant une pluralité de cartes, chacune selon l'une quelconque des revendications précédentes.

13. Pile de cartes selon la revendication 12, dans laquelle lesdites cartes sont agencées de telle sorte que chaque dite première surface principale (1) a un vecteur normal pointé dans une direction commune.

14. Plaque de stratification servant à former une carte selon l'une quelconque des revendications 1 à 11, la plaque de stratification comportant une surface de motifs configurée pour imprimer la structure en relief (4) sur un stratifié pour une carte, d'une telle manière que la carte a sa structure en relief entourée d'une bordure (5).
